(19) Europäisches Patentamt / European Patent Office / Office européen des brevets

(11) **EP 4 354 765 A1**

(12) **EUROPEAN PATENT APPLICATION**

(43) Date of publication:
**17.04.2024 Bulletin 2024/16**

(21) Application number: **22201193.4**

(22) Date of filing: **12.10.2022**

(51) International Patent Classification (IPC):
**H04B 17/00** (2015.01)    **H04B 17/29** (2015.01)
**G01S 7/40** (2006.01)

(52) Cooperative Patent Classification (CPC):
**H04B 17/0085; G01S 3/026; H04B 17/252**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **CAPORAL DEL BARRIO, Samantha**
**9000 Aalborg (DK)**

• **NIELSEN, Kim**
**9280 Storvorde (DK)**
• **ROM, Christian**
**9000 Aalborg (DK)**
• **JALILI, Feridoon**
**9260 Gistrup (DK)**
• **NG, Man Hung**
**Swindon, SN25 2JS (GB)**
• **VASENKARI, Petri Juhani**
**20250 Turku (FI)**

(74) Representative: **Page White Farrer**
**Bedford House**
**21a John Street**
**London WC1N 2BF (GB)**

(54) **METHOD, APPARATUS AND COMPUTER PROGRAM FOR TESTING A MULTI-RECEIVER DEVICE-UNDER-TEST (DUT)**

(57) There is provided a method comprising sending, to a device with multi receiver chains, a first test signal at a first angle of arrival at the device; whilst the first test signal is being sent, sending at least one additional test signal to the device at at least one additional angle of arrival that has an angular difference to the first angle of arrival; measuring at least one performance metric of the device whilst the device is receiving the first test signal and the at least one additional test signal; and comparing the at least one performance metric to at least one corresponding requirement value, the requirement value being dependent on the angular difference between the at least one additional angle of arrival and the first angle of arrival.

*FIG. 10*

EP 4 354 765 A1

**Description**

<u>FIELD</u>

The present application relates to a method, apparatus, and computer program, and in particular but not exclusively to testing of multi-receiver devices.

<u>BACKGROUND</u>

A user can access a communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier. It is known to test user devices in laboratory environments for research and development purposes.

<u>SUMMARY</u>

According to a first aspect there is provided a method comprising: sending, to a device with multi receiver chains, a first test signal at a first angle of arrival at the device; whilst the first test signal is being sent, sending at least one additional test signal to the device at at least one additional angle of arrival at the device that has an angular difference to the first angle of arrival; measuring at least one performance metric of the device whilst the device is receiving the first test signal and the at least one additional test signal; and comparing the at least one performance metric to at least one corresponding requirement value, the requirement value being dependent on the angular difference between the at least one additional angle of arrival and the first angle of arrival.

According to some examples, the at least one performance metric comprises a reference sensitivity value.

According to some examples, the at least one performance metric comprises an effective isotropic sensitivity spherical coverage value.

According to some examples, the first test signal is sent by a first test probe and the at least one additional test signal is sent by at least one additional test probe.

According to some examples, the first test probe or the at least one additional test probe is fixed in position, and the other of the first test probe or the at least one additional test probe is movable to enable the angular difference to be varied.

According to some examples, the at least one additional test probe is movable between a plurality of target positions, so that the angular difference is varied between a corresponding plurality of target angular differences.

According to some examples, the plurality of target angular differences are arranged at fixed intervals.

According to some examples, the fixed intervals comprise intervals of 30°.

According to some examples, the comparing the at least one performance metric to at least one corresponding requirement value comprises a first comparison, and the method comprises performing an additional test where the at least one additional angle of arrival is moved closer to the first angle of arrival to form a narrower angular difference, and performing a second comparison of the at least one performance metric to at least one corresponding requirement value at the narrower angular difference.

According to some examples, the first angle of arrival corresponds to a beam peak direction for the first test signal.

According to some examples, the at least one additional angle of arrival corresponds to a beam peak direction for the at least one additional test signal.

According to some examples, the beam peak direction for the at least one additional test signal is determined from spherical scanning.

According to some examples, the requirement value is more stringent for a relatively large difference in angle of arrival compared to a relatively small difference in angle of arrival.

According to a second aspect there is provided a computer readable medium comprising instructions which, when executed by an apparatus, cause the apparatus to perform at least the following: sending, to a device with multi receiver chains, a first test signal at a first angle of arrival at the device; whilst the first test signal is being sent, sending at least one additional test signal to the device at at least one additional angle of arrival at the device that has an angular difference to the first angle of arrival; measuring at least one performance metric of the device whilst the device is receiving the first test signal and the at least one additional test signal; and comparing the at least one performance metric to at least one corresponding requirement value, the requirement value being dependent on the angular difference between the at least one additional angle of arrival and the first angle of arrival.

According to a third aspect there is provided an apparatus comprising means for performing any steps of the first aspect.

According to some examples, the apparatus comprises a system.

According to a fourth aspect there is provided an apparatus comprising: means for sending, to a device with multi receiver chains, a first test signal at a first angle of arrival at the device; means for, whilst the first test signal is being sent, sending at least one additional test signal to the device at at least one additional angle of arrival at the device that has an angular difference to the first angle of arrival; means for measuring at least one performance metric of the device whilst the device is receiving the first test signal and the at least one additional test signal; and means for comparing the at least one performance metric to at least one corresponding requirement value, the requirement value being dependent on the angular difference between the at least one additional angle of arrival and the first angle of arrival.

According to some examples, the at least one performance metric comprises a reference sensitivity value.

According to some examples, the at least one performance metric comprises an effective isotropic sensitivity spherical coverage value.

According to some examples, the first test signal is sent by a first test probe and the at least one additional test signal is sent by at least one additional test probe.

According to some examples, the first test probe or the at least one additional test probe is fixed in position, and the other of the first test probe or the at least one additional test probe is movable to enable the angular difference to be varied.

According to some examples, the at least one additional test probe is movable between a plurality of target positions, so that the angular difference is varied between a corresponding plurality of target angular differences.

According to some examples, the plurality of target angular differences are arranged at fixed intervals.

According to some examples, the fixed intervals comprise intervals of 30°.

According to some examples, the means for comparing the at least one performance metric to at least one corresponding requirement value comprises means for performing a first comparison, and means for performing an additional test where the at least one additional angle of arrival is moved closer to the first angle of arrival to form a narrower angular difference, and means for performing a second comparison of the at least one performance metric to at least one corresponding requirement value at the narrower angular difference.

According to some examples, the first angle of arrival corresponds to a beam peak direction for the first test signal.

According to some examples, the at least one additional angle of arrival corresponds to a beam peak direction for the at least one additional test signal.

According to some examples, the apparatus comprises means for determining the beam peak direction for the at least one additional test signal from spherical scanning.

According to some examples, the requirement value is more stringent for a relatively large difference in angle of arrival compared to a relatively small difference in angle of arrival.

According to some examples, the apparatus comprises a system.

DESCRIPTION OF FIGURES

Embodiments will now be described, by way of example only, with reference to the accompanying Figures in which:

Figure 1 schematically shows a user device with a single receiver chain;
Figure 2 schematically shows a user device with multiple receiver chains;
Figure 3 schematically shows split-beam operation;
Figure 4 schematically shows single-beam operation;
Figure 5 schematically represents inter-layer interference when multiple receiver chains are simultaneously active;
Figure 6 schematically shows a representation of a spherical area for testing a device;
Figure 7 schematically shows a fixed-probe set-up for testing a device;
Figure 8 is a 2D graph showing example requirements for a multi-receiver device in a spherical coverage test;
Figure 9 is a plan view of an example test apparatus;
Figure 10 is a side view of the test apparatus of Figure 9;
Figure 11 is a flow chart of a method according to an example;
Figure 12 is a flow chart of a method according to an example;
Figure 13 schematically shows an apparatus according to an example;
Figure 14 schematically shows a flow chart of a method according to an example;
Figure 15 schematically shows a media for storing computer program instructions.

DETAILED DESCRIPTION

The present disclosure relates to multi-receiver (multi-RX) operation of user equipment (UE). By way of example, a multi-RX device may have multiple receiver "chains". By way of example, an RX chain may be considered a series of elements that constitute an independent signal path from an antenna or group of antennas towards a single Analogue to Digital converter. Typically, an Rx chain would form a beam or a dual polarised beam pair which would create a spatial filter to the analogue signal received by the UE array/panel, antenna element group all the way to the ADC.

More particularly, the present disclosure relates to testing of multi-RX UEs. Multi-RX operation is under discussion in 3GPP Release 18. A requirement for new radio (NR) frequency range 2 (FR2) multi-RX chain downlink (DL) reception is a Work Item for Rel-18 for RAN 4 (see (RP-221753). In 3GPP specifications (see Table 6.2.1.0-1 in TS 38.101-2v17.7.0), handheld UEs may also be referred to as "PC3 UEs".

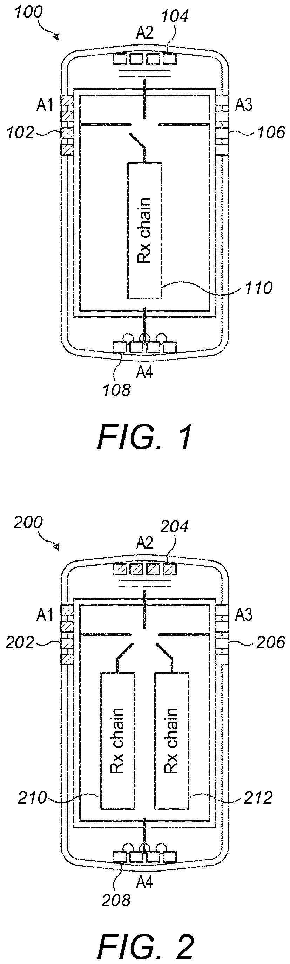

The present disclosure focuses on simultaneous reception at a UE from two TRPs (transmission points), in relation to Rel-18. Previously, in Rel-16/17 specification, single-RX chain architecture was assumed (see Figure 1) where a UE 100 may have multiple panels 102, 104, 106 and 108, and the RX chain 110 may be switched among them to operate a single panel at a time. This corresponds to single angle of arrival (AoA) testing for RAN4 RF Requirements. It should be appreciated that embodiments may be applied to any multi-RX UE.

A UE 200 with multiple RX chains 210, 212 is shown in Figure 2, where both RX chains 210, 212 may be simultaneously connected to any of the UE panels 202, 204, 206, 208. For example, two panels may be active at the same time.

It is also worth noting that for Rel-16/17, only single beam per polarization per panel operation has been assumed. Nonetheless, today's architectures could also implement multiple beams per polarization per panel, i.e. more than one RX chain may be connected to a single panel. Therefore, the number of RX chains may be discussed without implication of a specific panel architecture.

The present disclosure also considers single-beam versus split-beam operation on a UE panel. Depending on UE front-end architecture, a panel may support, by way of example:

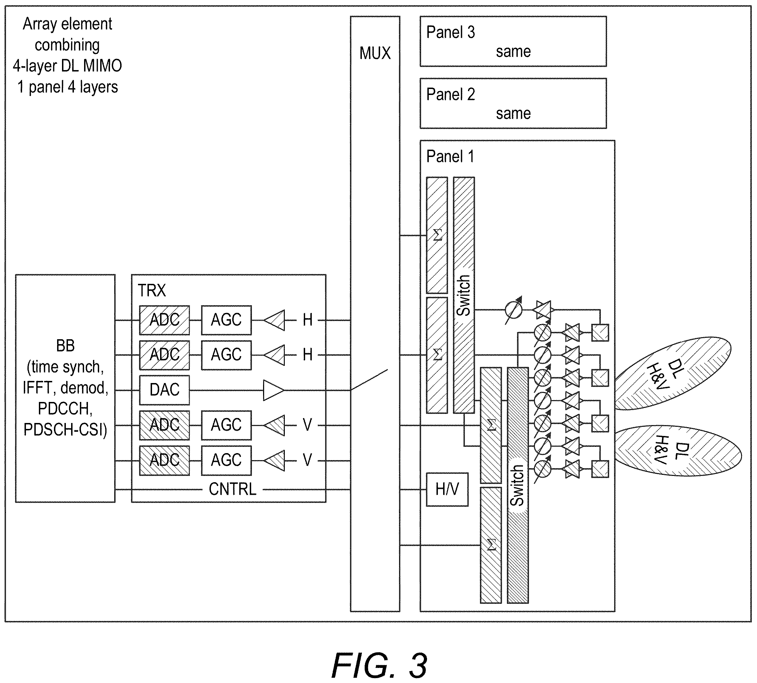

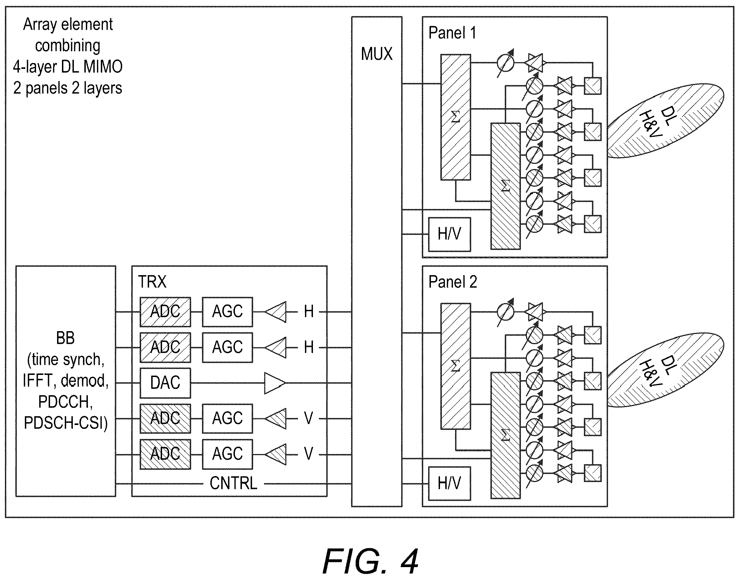

- only two Rx chains and hence form a dual-polarized beam with maximum gain e.g. 12 dB gain for a 1x4 linear array, as shown in Figure 4
- all four Rx chains on the same panel hence form two dual-polarized beams with lower gain, e.g. 9 dB gain with two juxtaposed 1x2 linear arrays, as shown in Figure 3

Both single-beam and split-beam operations are within the scope of the present disclosure. In comparison, single-beam operation offers higher peak gain, while split-beam operation may only provide a 3 dB lower peak gain value (due to splitting the array into two sub-arrays). Furthermore, for two beams that are simultaneously active, Inter-Beam-Interference (IBI) may arise, and the achievable spherical cover may vary depending on the single-beam vs split-beam operation.

Hybrid-Analog-Digital (HAD) architectures may also be possible in future UE implementations, which do not limit the antenna gain in the case of more than 2 Rx chains on a single panel. Then a UE can maintain maximum gain with split-beam operation, for example 12 dB with a 1x4 linear array. However, such structures are complex and costly.

"Reference sensitivity" (Refsens) is a performance parameter that has been defined in earlier releases. Refsens values for single AoA defined in earlier releases is shown by way of example in Table 1 below (extracted from 3GPP TS 38.101). In examples, Refsens is determined through identification of the beam peak direction of the device under test placed at a centre of a "quiet zone" that results in the lowest level of input power that the UE may use to keep the throughput (TPUT) of the defined reference measurement channel at a threshold value (e.g. 95%) of a theoretical maximum.

Table 1

| Operating band | REFSENS (dBm) / Channel bandwidth | | | | | | |
|---|---|---|---|---|---|---|---|
| | 50 MHz | 100 MHz | 200 MHz | 400 MHz | 800 MHz | 1600 MHz | 2000 MHz |
| n257 | -88.3 | -85.3 | -82.3 | -79.3 | N.A | N.A | N.A |
| n258 | -88.3 | -85.3 | -82.3 | -79.3 | N.A | N.A | N.A |
| n259 | -84.7 | -81.7 | -78.7 | -75.7 | N.A | N.A | N.A |
| n260 | -85.7 | -82.7 | -79.7 | -76.7 | N.A | N.A | N.A |
| n261 | -88.3 | -85.3 | -82.3 | -79.3 | N.A | N.A | N.A |

(continued)

| Operating band | REFSENS (dBm) / Channel bandwidth | | | | | | |
|---|---|---|---|---|---|---|---|
| | 50 MHz | 100 MHz | 200 MHz | 400 MHz | 800 MHz | 1600 MHz | 2000 MHz |
| n262 | -82.8 | -79.8 | -76.8 | -73.8 | N.A | N.A | N.A |
| n263 | N.A | -78 | N.A | -72 | -69 | -66 | -65 |
| NOTE 1: The transmitter shall be set to $P_{UMAX}$ as defined in clause 6.2.4 | | | | | | | |

Spherical coverage, or more particularly Equivalent Isotropic Sensitivity (EIS) spherical coverage, has also been defined in earlier 3GPP releases, limited to targeting single TRP transmission at a time i.e. single AoA at a time. Typically, spherical coverage is easier to achieve when a UE has more spatially separated antennas implemented, as more antenna arrays are along a periphery of a device. Spherical coverage may be considered to relate to how many grid-points on a surface of a notional sphere surrounding a device under test (DUT) have a received signal at an acceptable level according to requirements. In legacy requirements, 50% of grid-points would be considered an acceptable level. Table 2 below (also extracted from 3GPP TS 38.101) shows an example of acceptable EIS spherical coverage values.

Table 2

| Operating band | EIS at 50th %-tile CCDF (dBm) / Channel bandwidth | | | | | | |
|---|---|---|---|---|---|---|---|
| | 50 MHz | 100 MHz | 200 MHz | 400 MHz | 800 MHz | 1600 MHz | 2000 MHz |
| n257 | -77.4 | -74.4 | -71.4 | -68.4 | N.A | N.A | N.A |
| n258 | -77.4 | -74.4 | -71.4 | -68.4 | N.A | N.A | N.A |
| n259 | -71.9 | -68.9 | -65.9 | -62.9 | N.A | N.A | N.A |
| n260 | -73.1 | -70.1 | -67.1 | -64.1 | N.A | N.A | N.A |
| n261 | -77.4 | -74.4 | -71.4 | -68.4 | N.A | N.A | N.A |
| n262 | -69.7 | -66.7 | -63.7 | -60.7 | N.A | N.A | N.A |
| n263 | N.A | -66.2 | N.A | -60.2 | -57.2 | -54.2 | -53.2 |
| NOTE 1: The transmitter shall be set to $P_{UMAX}$ as defined in clause 6.2.4 | | | | | | | |
| NOTE 2: The EIS spherical coverage requirements are verified only under normal thermal conditions as defined in Annex E.2.1. | | | | | | | |

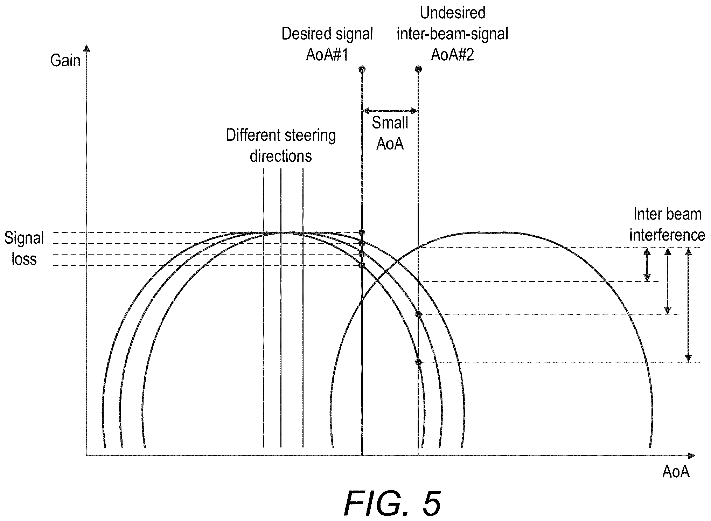

As mentioned above, Rel-18 is targeting multiple RX chains simultaneously receiving on a UE. Currently there are no requirements nor test cases for UE RF performance in multi-RX operation. Since there will be two or more AoAs, current requirements for a single AoA may not be adequate. Thus, aspects of inter-beam interference may arise, from two test points of test equipment operating simultaneously within a confined space, as represented in Figure 5. The signal from one AoA is received with too high power with the non-corresponding UE beam, hence degrading the performance of the signal from the other AoA. Thus, the present disclosure identifies that Refsens and spherical coverage (e.g. EIS spherical coverage) and accompanying test methodology should be defined for multiple Rx chains (i.e. multiple simultaneously active UE beams).

Before describing specific examples, and the new test procedure, a contribution of the present disclosure is provided in bullet-point form below:

- Provision of an additional Refsens requirement targeting a second RX chain of a UE, while a first RX chain of the UE is active

   ○ Introduction of a new requirement for the primary RX chain while the secondary RX chain is active with a fixed probe/direction

      ■ This new requirement for the primary RX chain may be "looser" or more relaxed (i.e. less stringent) than a requirement where there is only a single RX chain

○ Introducing a new requirement for the secondary RX chain of the UE while the primary RX chain is active with a fixed probe/direction

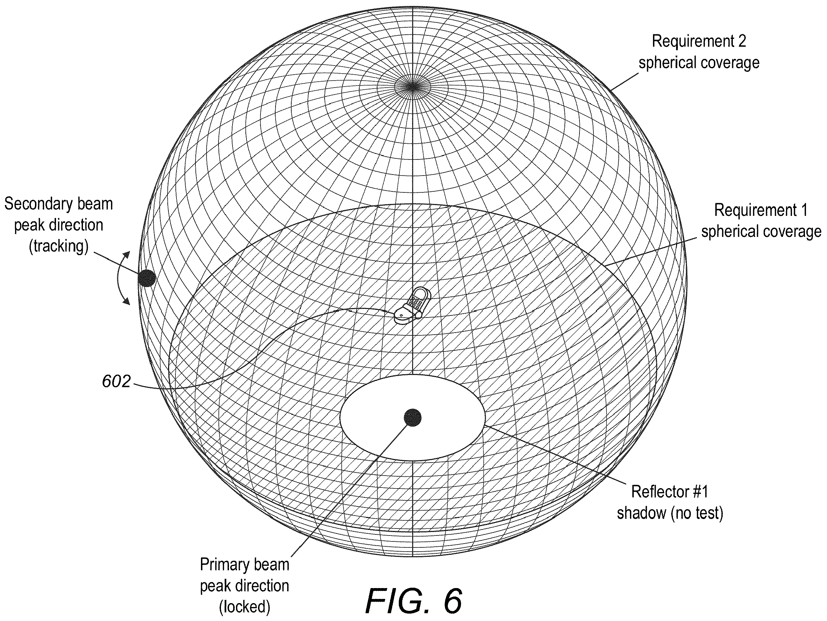

• Additional Spherical Coverage requirements for the secondary RX chain while the first RX chain is active with a fixed probe/direction. According to some examples, two or more sets of additional spherical coverage values are obtained, e.g. different values depending on separation between the two AoAs at the device under test (DUT). See Figure 6, which shows a DUT 602 placed at the centre of a notional sphere. Figure 6 shows a representation of different zones to test the UE for Refsens and/or EIS spherical coverage. The shaded area shows a relatively small AoA separation, and the region outside the shaded area shows a relatively large AoA separation.

○ For the relatively small AoA separation, the requirements may be more relaxed compared to those for the relatively large AoA;
○ For the relatively large AoA separation, the requirements may be stricter compared to those for the relatively small AoA.

In some examples the Refsens and/or EIS spherical coverage requirements to be met may be considered as performance metrics to be met.

The AoA may be considered AoA of test signal at the UE. It is to be noted that the present disclosure does not propose a change to single Rx chain Refsens requirement.

In some examples the Refsens test may use a same or similar test procedure as the EIS spherical coverage test i.e. one fixed probe and one rotating probe (explained in more detail below), in a case where both Refsens requirements (one per each RX chain) are tested simultaneously and each on their beam peak direction, which may differ from UE type to UE type, e.g. different power class UEs.

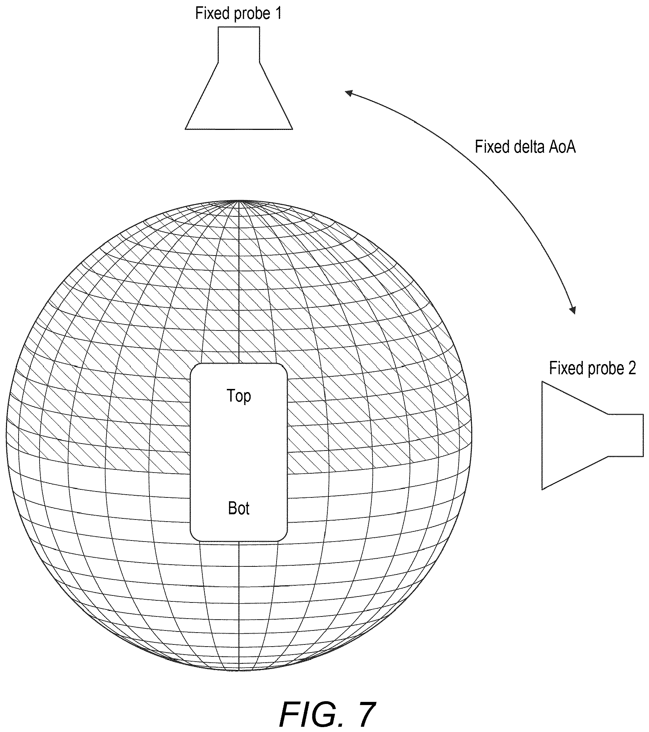

Otherwise, if only one Refsens requirement is tested at a time with multi-RX chains active, or if the angle between the two peak beams is known and fixed, then the Refsens test may use a simpler and cheaper setup with two fixed probes with fixed separation, as shown in Figure 7. For example, the fixed separation may be 90 degrees.

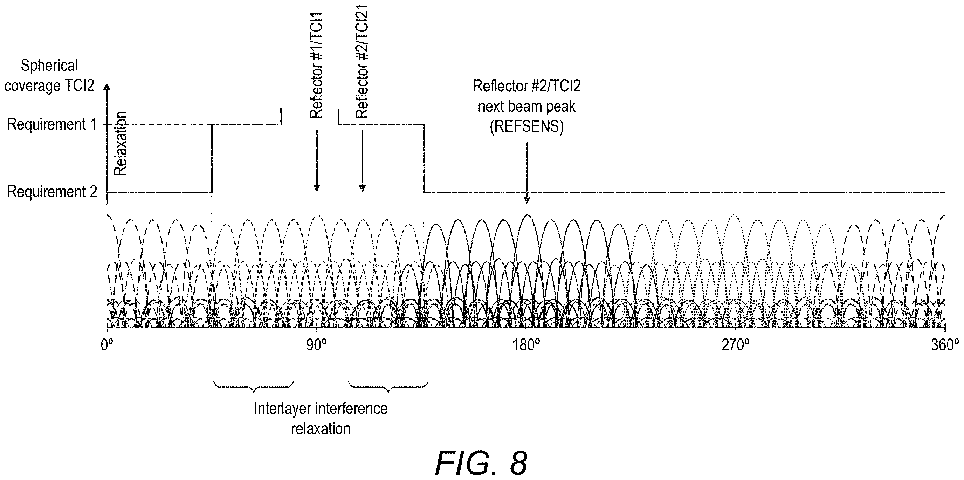

Figures 8, 9 and 10 can be considered together for better understanding. Figure 8 shows exemplary UE RF requirements for multi-RX operation in a spherical coverage test case. The graph of Figure 8 shows a "cut" through the sphere of Figure 7, and shows how the step requirements (more relaxed vs less relaxed) translate to a 2D graph.

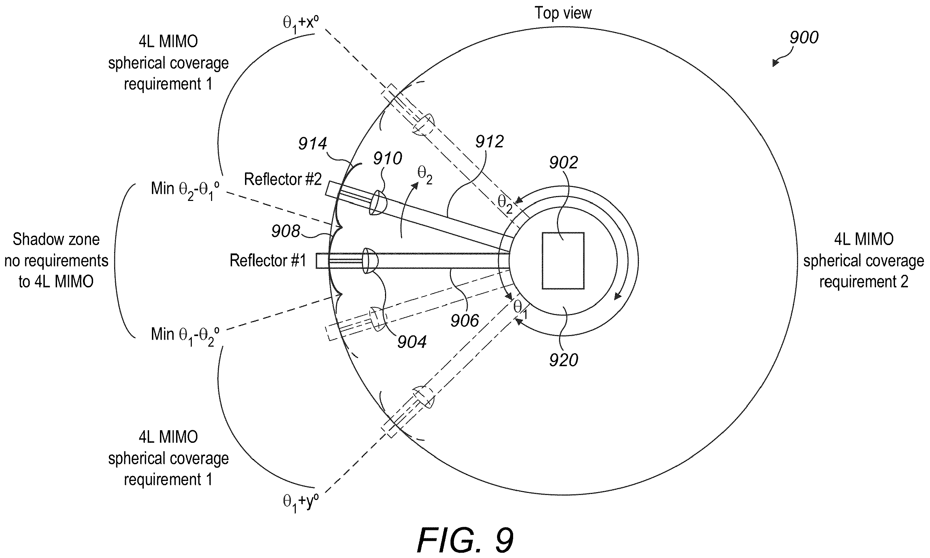

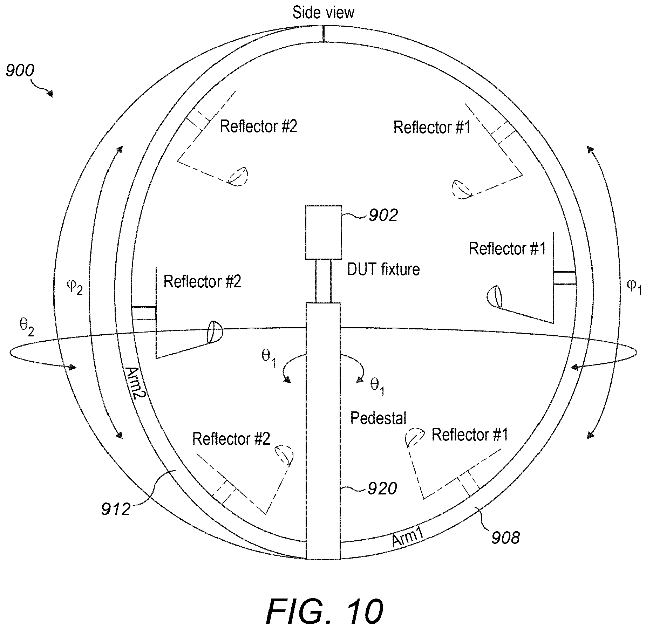

Figure 9 is a top-view of a test system 900, and Figure 10 is a side view of the test system 900.

The requirements represented in Figure 8 show that there are two levels:

- "Requirement 1" is more relaxed than "requirement 2", and corresponds to two test signal AoAs being received on a same antenna panel of the UE. This corresponds to the shaded zone in Figure 6.

- Requirement 2 is less relaxed than requirement 1 and corresponds to the two AoAs being received by two different antenna panels on the UE. This corresponds to the area outside the shaded zone in Figure 6.

Referring to the apparatus or system 900 shown in Figures 9 and 10, a DUT is shown at 902. A first test probe 904 is shown, for sending test signals. In this example, first test probe 904 is located on arm 906. A first reflector 908, is provided at an end of arm 906, for reflecting test signals from probe 904 back towards the DUT 902. A second test probe 910 is shown, for sending test signals. In this example, second test probe 910 is located on arm 912. A second reflector 914, is provided at an end of arm 912, for reflecting test signals from probe 910 back towards the DUT 902. The AoA of a test signal from a probe will depend on the position of the probe relative to the DUT. In some examples, one probe (e.g. first probe 904) is kept fixed during a test procedure. In some examples, one probe (e.g. second probe 910) is moved during the test procedure, for example by rotating arm 912 about the DUT 902. This enables AoA between signals from the first test probe 904 and the second test probe 910 to be varied. In some examples, rather than a rotatable arm 912, multiple "second" test probes may be provided to enable AoA at DUT 902 to be varied. Either way, a difference between an angle of arrival from a signal from a first probe and an additional (e.g. second) probe may be produced, through controlling positioning of the first probe and the additional probe. In examples this difference may be varied, by varying the relative positions of the first probe and the additional probe.

The test system 900 may be incorporated in a test chamber. 3GPP 38.810 discusses test methods of NR and considers direct-far-field (DFF) and indirect far-field (IFF), which associate the test method to the use of probes pointing directly at the device under test (DUT), or at a reflector that serves to create the near-to-far field transformation. The methods have different requirements to distance towards the DUT, which means they create dependencies on size of chamber. The present disclosure describes the test chamber as IFF based, but is not limited thereto. DFF chambers and setups may also be used.

In examples, the test is conducted in an anechoic chamber that allows two rotational axes to the DUT 902.

This could be achieved having a pedestal 920 centred inside a spherical setup that may rotate the DUT 902. A second point of rotation is available as an extended arm (e.g. arm 912) that can rotate at a distance from the centre of the test system.

In examples, the rotation of the centre (e.g. DUT 902 rotation) is referenced $\theta_1$. The rotation of the extended arm (e.g. arm 912) is referenced as $\theta_2$.

In examples, the test system 900 has the option to transmit towards the DUT 902 from two angles $\theta_1$, $\theta_2$ simultaneously. As mentioned above, rotation of $\theta_2$ could be achieved by switching between multiple probes distributed in an even distance to the centre of the setup, but can be solved in a more controlled and less expensive manner with a second rotating arm (e.g. arm 912).

In some examples, besides horizontal orientation, the DUT 902 may be receiving at different vertical angles $\phi_1, \phi_2$. (see Fig. 10).

Figure 9 shows the pedestal 920 that will support the DUT 902 at the centre with a first arm 906 extended to a first reflector 908 having a first test probe 904. The pedestal 920 supports a fixture for the DUT 902 that positions the DUT 902 at the centre of the "quiet zone", and the fixture rotates with the pedestal 920 at $\theta_1$. In examples, the first arm 908 is of a fixed position and will be supporting rotation through $\theta_1$ by the pedestal rotating the DUT 902, while $\phi_1$ moves the first reflector 908 and first probe 904 along the direction shown in the sideview of Figure 10. Two alternate positions representing movement of first reflector 908 are shown in dotted lines.

Figure 10 shows second arm 912 connected at the bottom to the pedestal carrying a second reflector 914 and a second probe 910. The second arm 912 may rotate in the direction $\theta_2$ of Figure 9, but may be confined not to move beyond the points where first reflector 908 and second reflector 914 would coincide. The movement of second arm 912 is shown in dotted lines in Figure 9. The second reflector 914 and second probe 910 may move at the angle $\phi_2$ as shown in Figure 10. Two alternate positions of second reflector 914 are shown in Figure 10 in dotted lines.

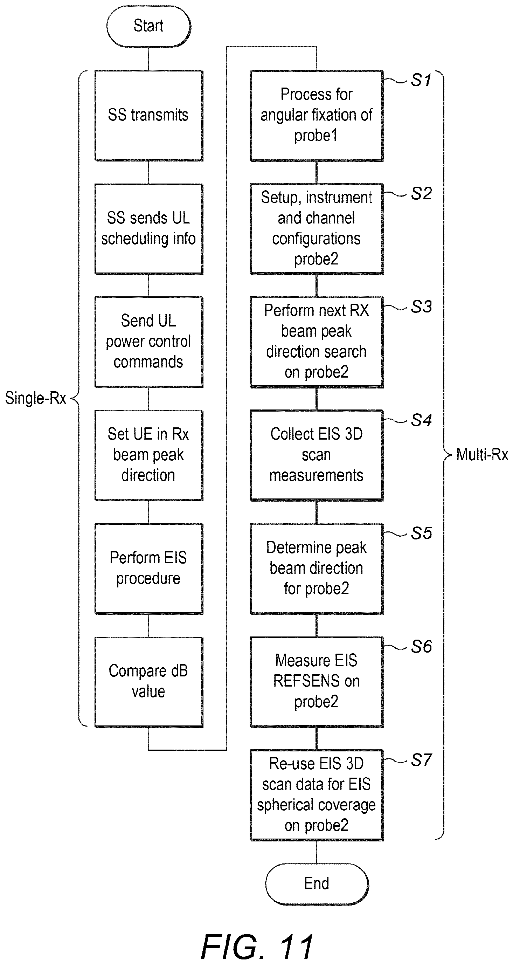

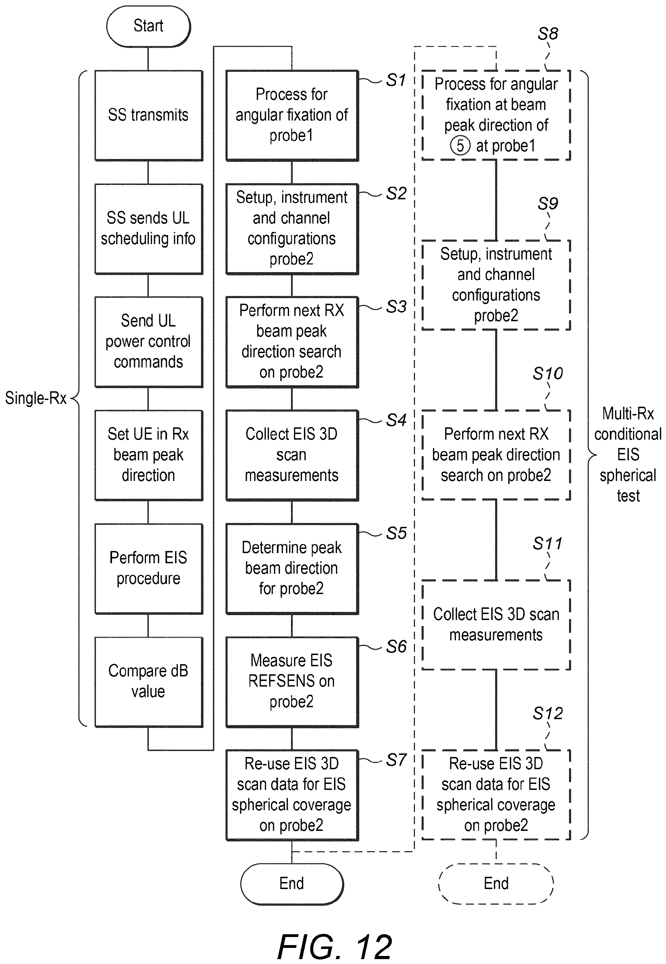

An exemplary test sequence will now be described with respect to Figures 11 and 12. Figure 11 is an exemplary test sequence for a multi-RX test. Figure 12 follows-on from Figure 11, and shows some exemplary additional steps to be taken in certain situations.

Referring now to Figure 11, the existing test for single-RX testing is shown on the left-side of Figure 11 (bracketed at "Single-RX"). The single-RX test comprises six main steps, which are summarized in the six boxes adjacent "Single-RX" in Figures 11 and 12. Full details of these six steps can be found in 3GPP TS38.521-2 v17.0.0, at 7.3.2.4.2.

According to some examples, the new procedure may begin after the single-RX test sequence. In the following description, the DUT 902 may also be referred to as UE.

At S1, the UE 902 is fixed in the RX beam peak direction found during the single-RX testing ($\theta1,\phi1$). In examples, "beam peak direction" means the received beam direction where the minimum (averaged EIS across two polarizations) is found. At the position defined at $\theta1$, $\phi1$, the UE 902 is secured through means of confining the AoA (signals from test probes in the test system) and the beam peak direction. For example, referring to test system 900, first probe 904 may be maintained at position $\theta1$, $\phi1$. In examples, the UE 902 maintains this link (between first probe 904 and the UE 902) throughout the test. This link may also be referred to as AoA1 (TCI1), where TCI is transmission configuration indicator. If this link drops, it may be considered that the UE 902 fails the test.

At S2, the test system 900 that controls and configures second probe 910 and second reflector 914 is placed at the minimum distance to first reflector 908 (on first arm 906) and initiated i.e. the second probe 910 is switched on to send test signals towards UE 902.

At S3, EIS RX beam peak direction for second probe 910 is determined. It will be noted that this procedure may not cover complete spherical surface due to exceptions at the angles that would force first arm 906 and second arm 912 to coincide. This may limit the multi-RX test to the angles $\theta_2$. $\phi_2$ Then, the test (3D EIS scan) captures results for second probe 910 from the UE 902.

At S4, EIS results from the RX beam peak search procedures conducted at S3 are collected and processed. For example, the results may be collected and processed in the same way as the procedure for determining the RX beam peak direction, i.e.:

$$\text{averaged EIS} = 2*[1/\text{EIS}(\text{Pol}_{\text{Meas}}=\theta, \text{Pol}_{\text{Link}}=\theta) +1/\text{EIS}(\text{Pol}_{\text{Meas}}=\phi, \text{Pol}_{\text{Link}}=\phi)]^{-1}$$

The RX beam peak direction is where the minimum "averaged EIS" is found.

At S5, the next beam peak direction is determined from $\theta_2$, $\phi_2$ and used for repositioning second probe 910 (e.g. by rotating second arm 912).

At S6, the Refsens value for second probe 910 is measured at $\theta_2$, $\phi_2$. For example, this may be carried out in the same procedure as for the single-rx case.

At S7, EIS spherical coverage values for second probe 910 are obtained. In some examples, this is done by using the results from the 3D EIS scan obtained at S3 applied on second probe 910.

In some examples, it could be considered that the steps S2 to S7 correspond to the six "Single-RX" steps (left side of Figure 11), but carried out on the second probe rather than on a single "first" probe.

The EIS Refsens values (S6) and/or EIS spherical coverage values (S7) may then be compared to tables, to check whether the UE has passed the test.

Therefore it may be considered that in order to pass the test, values for Refsens and/or EIS spherical coverage shall be below or equal to specified (threshold) value.

As an additional example of the test sequence, it is acknowledged that UE 902 may not have symmetrical or similar performance of antennas. This can result in a "fail" of EIS spherical coverage testing and therefore an additional test is disclosed, to test if the UE 902 can pass the test at swapped angular orientations. In examples, a swapped orientation means that the beam peak direction $(\theta_1, \phi_1)$, and next beam peak direction $(\theta_2, \phi_2)$, are swapped. In examples, it also means that the UE 902 must meet the REFSENS requirements of S6 in Figure 11 to be allowed to proceed to this additional multi-RX spherical coverage test. The additional test is shown in Figure 12, where S8 continues from S7 of Figure 11.

Referring to Figure 12, at S8 the next beam peak direction identified in S5 is used for rotating the UE 902 (e.g. by rotation of pedestal 920), towards first probe 904 used in the single-rx test. This alters the orientation of the UE 902 so that the angular fixation towards first probe 904 is conducted at the UEs next beam direction.

At S9, the test system 900 controls and configures second probe 910, so that it is placed a minimum distance from first probe 904. For example, second arm 912 (and consequently second probe 910 and second reflector 914) is moved towards first arm 906 (and consequently first probe 904 and first reflector 908). Second probe 910 is then initiated i.e. begins sending test signals towards UE 902.

At S10, next EIS RX beam peak direction for second probe 910 is determined. It is noted that this procedure may not cover complete spherical surface due to the exceptions at the angles that would force first arm 906 and second arm 912 to coincide. This may limit the multi-RX test to the angles $\theta_2, \phi_2$ The test then captures results for second probe 910 from the UE 902.

At S11, the results of the EIS 3D Scan are collected and processed. For example, they may be collected and processed in the same way as the procedure for determining the RX beam peak direction.

$$\text{averaged EIS} = 2*[1/EIS(Pol_{Meas}=\theta, Pol_{Link}=\theta) +1/EIS(Pol_{Meas}=\phi, Pol_{Link}=\phi)]^{-1}$$

The RX beam peak direction is where the minimum "averaged EIS" is found.

At S12, the EIS 3D scan data of the process at S10 is treated for EIS spherical coverage.

In some examples, it could be considered that the steps S8 to S12 correspond to the six "Single-RX" steps (left side of Figures 11 and 12), but carried out on the second probe at an additional angle of arrival, rather than on a single "first" probe.

This procedure allows for it to be determined whether, for a UE with different codebooks for different antenna arrays, a swap of direction between the beam peak direction of single-rx testing with that identified in the first part of the multi-RX testing brings the UE to pass the test. In some examples the test requirements remain the same, it is only the angular swap that is allowed for the UE.

In some examples, the second probe may be in a position far away from the first probe at the start of the test, and then be moved towards the first probe during the test (e.g. as successive beam peak directions are searched). Alternatively, the second probe may be in a position close to the first probe at the start of the test, and then be moved away from the first probe during the test. In this latter option (where second probe is moving away from the first probe), this may result in a Refsens value of the UE beam to the first probe that improves as the second probe is moved away, specifically when the second probe is on another panel to the first probe. This is because the UE beam operation may switch from being split-beam operation (with e.g. 3 dB lower gain) to single-beam operation with maximum achievable gain. This test procedure can be mapped to the sphere in Figure 6 as if going from the shaded zone (small AoA separation) to the non-shaded zone (large AoA separation). In some examples there are target angular differences between AoA from first probe and second probe. In some examples, tests are conducted at each of these target angular differences. In some examples, the target angular differences are incremented or decremented in fixed steps, e.g. 30°; 60°; 90°; 120°; 150°. etc.

Therefore, it will be understood that in accordance with examples it is determined whether a multi-receiver device (DUT) is in compliance with requirements by transmitting a primary signal (e.g. from a first probe) and an additional or secondary signal (e.g. from second probe) simultaneously to the DUT, where at least one threshold for determining compliance is selected in dependence on a difference in angle-of-arrival (AoA) of the primary and secondary signal at the device. In examples, the threshold is either a Refsens and/or an EIS threshold. In some examples there are separate values for large and small differences in AoA. This differs from prior art tables, which are for a single-receiver and are defined agnostic to any AoA.

In some examples, a "small" AoA may be considered an angle less than 45 degrees (and in some examples may include 45 degrees). In some examples, a "large" AoA may be considered an angle greater than 45 degrees (and in some examples may include 45 degrees).

It will be understood that new requirement tables may be required for Refsens for the secondary RX chain. An example table of values is shown in Table 3 below:

Table 3

| AoA separation | Operating band | REFSENS (dBm) / Channel bandwidth | | | | | | |
|---|---|---|---|---|---|---|---|---|
| | | 50 MHz | 100 MHz | 200 MHz | 400 MHz | 800 MHz | 1600 MHz | 2000 MHz |
| **<45 degrees** | n257 | **-85.3** | **-82.3** | **-79.3** | **-76.3** | N.A | N.A | N.A |
| | n258 | **-85.3** | **-82.3** | **-79.3** | **-76.3** | N.A | N.A | N.A |
| | n259 | **-81.7** | **-78.7** | **-75.7** | **-72.7** | N.A | N.A | N.A |
| | n260 | **-82.7** | **-79.7** | **-76.7** | **-73.7** | N.A | N.A | N.A |
| | n261 | **-85.3** | **-82.3** | **-79.3** | **-76.3** | N.A | N.A | N.A |
| | n262 | **-79.8** | **-76.8** | **-73.8** | **-70.8** | N.A | N.A | N.A |
| | n263 | **N.A** | **-75** | **N.A** | **-69** | -66 | -63 | -62 |
| **>=45 degrees** | **n257** | *-87.3* | *-84.3* | *-81.3* | *-78.3* | N.A | N.A | N.A |
| | **n258** | *-87.3* | *-84.3* | *-81.3* | -78.3 | N.A | N.A | N.A |
| | **n259** | *-83.7* | *-80.7* | *-77.7* | -74.7 | N.A | N.A | N.A |
| | **n260** | *-84.7* | *-81.7* | *-78.7* | -75.7 | N.A | N.A | N.A |
| | **n261** | *-87.3* | *-84.3* | *-81.3* | -78.3 | N.A | N.A | N.A |
| | **n262** | *-81.8* | *-78.8* | *-75.8* | -72.8 | N.A | N.A | N.A |
| | **n263** | *N.A* | *-77* | *N.A* | -71 | -68 | -65 | -64 |
| | NOTE 1: The transmitter shall be set to $P_{UMAX}$ as defined in clause 6.2.4 | | | | | | | |

In Table 3, the values in bold are additions to the current specification table, with large relaxation for (e.g. <45 degrees by way of non-limiting example) AoA separation (inside the shaded zone in Figure 6). In italics are the changes to the current specification table, with the low relaxation (e.g. >= 45 degrees by way of non-limiting example) AoA separation (outside the shaded zone in Figure 6).

Consider a non-limiting numerical example: 3 dB relaxation on the values where the AoA separation is small (e.g. below 45 degrees), within the shaded area of the sphere of Figure 6, i.e. split-beam operation. For the AoA separation above 45 degrees, the requirements may be relaxed by 1 dB since the different AoAs would be detected on different panels (smaller impact of inter-beam interference).

New requirements may also be needed for EIS spherical coverage. An example table of values for EIS spherical coverage is provided in Table 4 below.

Table 4

| Operating band | EIS at 50th %-tile CCDF (dBm) of large AoA separation / Channel bandwidth | | | | | | |
|---|---|---|---|---|---|---|---|
| | 50 MHz | 100 MHz | 200 MHz | 400 MHz | 800 MHz | 1600 MHz | 2000 MHz |
| n257 | -77.4 | -74.4 | -71.4 | -68.4 | N.A | N.A | N.A |
| n258 | -77.4 | -74.4 | -71.4 | -68.4 | N.A | N.A | N.A |
| n259 | -71.9 | -68.9 | -65.9 | -62.9 | N.A | N.A | N.A |
| n260 | -73.1 | -70.1 | -67.1 | -64.1 | N.A | N.A | N.A |
| n261 | -77.4 | -74.4 | -71.4 | -68.4 | N.A | N.A | N.A |
| n262 | -69.7 | -66.7 | -63.7 | -60.7 | N.A | N.A | N.A |

(continued)

| Operating band | EIS at 50th %-tile CCDF (dBm) of large AoA separation / Channel bandwidth | | | | | | |
|---|---|---|---|---|---|---|---|
| | 50 MHz | 100 MHz | 200 MHz | 400 MHz | 800 MHz | 1600 MHz | 2000 MHz |
| n263 | N.A | -66.2 | N.A | -60.2 | -57.2 | -54.2 | -53.2 |
| | EIS at 50th %-tile CCDF (dBm) of small AoA separation / Channel bandwidth | | | | | | |
| n257 | -74.4 | -71.4 | -68.4 | -65.4 | N.A | N.A | N.A |
| n258 | -74.4 | -71.4 | -68.4 | -65.4 | N.A | N.A | N.A |
| n259 | -68.9 | -65.9 | -62.9 | -59.9 | N.A | N.A | N.A |
| n260 | -70.1 | -67.1 | -64.1 | -61.1 | N.A | N.A | N.A |
| n261 | -74.4 | -71.4 | -68.4 | -65.4 | N.A | N.A | N.A |
| n262 | -66.7 | -63.7 | -60.7 | -57.7 | N.A | N.A | N.A |
| n263 | N.A | -63.2 | N.A | -57.2 | -54.2 | -51.2 | -50.2 |
| NOTE 1: The transmitter shall be set to $P_{UMAX}$ as defined in clause 6.2.4 | | | | | | | |
| NOTE 2: The EIS spherical coverage requirements are verified only under normal thermal conditions as defined in Annex E.2.1. | | | | | | | |

In Table 4, "large AoA separation" may refer to e.g. >= 45 degrees AoA separation (outside the shaded zone in Figure 6). "Small AoA separation" may refer to e.g. <45 degrees AoA separation (inside the shaded zone in Figure 6).

An example of 3 dB is proposed for the values corresponding to small AoA separation in comparison to the values corresponding to a large AoA separation. Furthermore, the %-tile is proposed to be 50%.

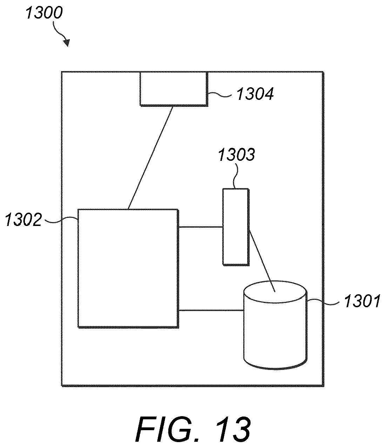

A schematic example of an apparatus is shown in Figure 13. The apparatus of Figure 13 may be configured to perform one or more steps of the present disclosure. For example, a UE or control apparatus may comprise one or more features of the apparatus of Figure 13. The apparatus 1300 comprises at least one memory 1301, at least one data processing unit 1302, 1303 and an input/output interface 1304. Via the interface the control apparatus can be coupled to a receiver and a transmitter of. The receiver and/or the transmitter may be implemented as a radio front end or a remote radio head. For example, the apparatus 1300 can be configured to execute an appropriate software code to provide the control functions. In some examples, the apparatus may comprise a centralized controller of the system 900, which is configured to cause the described method to be carried out.

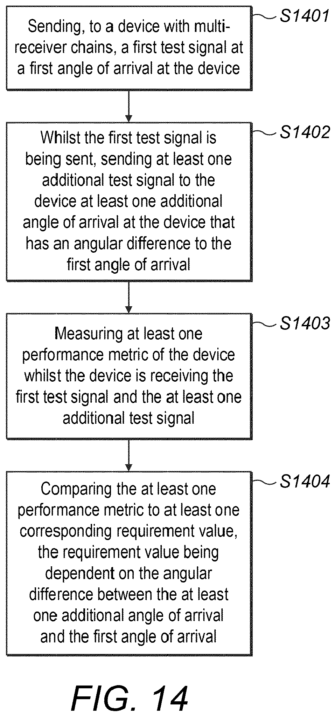

Figure 14 is a flow chart showing a method according to an example. The steps shown in the flow chart may be carried out by one or more apparatus.

At S1401 the method comprises sending, to a device with multi-receiver chains, a first test signal at a first angle of arrival at the device.

At S1402 the method comprises, whilst the first test signal is being sent, sending at least one additional test signal to the device at at least one additional angle of arrival at the device that has an angular difference to the first angle of arrival.

At S1403 the method comprises measuring at least one performance metric of the device whilst the device is receiving the first test signal and the at least one additional test signal.

At S1404 the method comprises comparing the at least one performance metric to at least one corresponding requirement value, the requirement value being dependent on the angular difference between the at least one additional angle of arrival and the first angle of arrival.

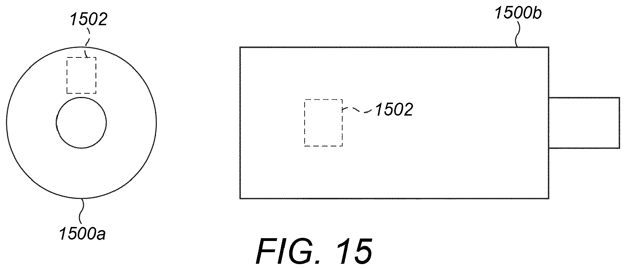

Figure 15 shows a schematic representation of non-volatile memory media 1500a (e.g., computer disc (CD) or digital versatile disc (DVD)) and 1500b (e.g., universal serial bus (USB) memory stick) storing instructions and/or parameters 1502 which when executed by a processor allow the processor to perform one or more of the steps of the method of Figure 14.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing

**EP 4 354 765 A1**

devices, or some combination thereof.

As used in this application, the term "circuitry" may refer to one or more or all of the following: (a) hardware-only circuit implementations (such as implementations in only analog and/or digital circuitry) and(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatusreadable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. A method comprising:

   sending, to a device with multi receiver chains, a first test signal at a first angle of arrival at the device;
   whilst the first test signal is being sent, sending at least one additional test signal to the device at at least one additional angle of arrival at the device that has an angular difference to the first angle of arrival;
   measuring at least one performance metric of the device whilst the device is receiving the first test signal and the at least one additional test signal; and
   comparing the at least one performance metric to at least one corresponding requirement value, the requirement value being dependent on the angular difference between the at least one additional angle of arrival and the first angle of arrival.

2. A method according to claim 1, wherein the at least one performance metric comprises a reference sensitivity value.

11

3. A method according to claim 1 or claim 2, wherein the at least one performance metric comprises an effective isotropic sensitivity spherical coverage value.

4. A method according to any of claims 1 to 3, wherein the first test signal is sent by a first test probe and the at least one additional test signal is sent by at least one additional test probe.

5. A method according to claim 4, wherein the first test probe or the at least one additional test probe is fixed in position, and the other of the first test probe or the at least one additional test probe is movable to enable the angular difference to be varied.

6. A method according to claim 5, wherein the at least one additional test probe is movable between a plurality of target positions, so that the angular difference is varied between a corresponding plurality of target angular differences.

7. A method according to claim 5 or claim 6, wherein the comparing the at least one performance metric to at least one corresponding requirement value comprises a first comparison, and the method comprises performing an additional test where the at least one additional angle of arrival is moved closer to the first angle of arrival to form a narrower angular difference, and performing a second comparison of the at least one performance metric to at least one corresponding requirement value at the narrower angular difference.

8. A method according to any of claims 1 to 7, wherein the first angle of arrival corresponds to a beam peak direction for the first test signal.

9. A method according to any of claims 1 to 8, wherein the at least one additional angle of arrival corresponds to a beam peak direction for the at least one additional test signal.

10. A method according to claim 9, wherein the beam peak direction for the at least one additional test signal is determined from spherical scanning.

11. A method according to any of claims 1 to 10, wherein the requirement value is more stringent for a relatively large difference in angle of arrival compared to a relatively small difference in angle of arrival.

12. A computer readable medium comprising instructions which, when executed by an apparatus, cause the apparatus to perform at least the following:

   sending, to a device with multi receiver chains, a first test signal at a first angle of arrival at the device;
   whilst the first test signal is being sent, sending at least one additional test signal to the device at at least one additional angle of arrival at the device that has an angular difference to the first angle of arrival;
   measuring at least one performance metric of the device whilst the device is receiving the first test signal and the at least one additional test signal; and
   comparing the at least one performance metric to at least one corresponding requirement value, the requirement value being dependent on the angular difference between the at least one additional angle of arrival and the first angle of arrival.

13. An apparatus comprising means for performing any steps of claims 1 to 12.

14. An apparatus comprising:

   means for sending, to a device with multi receiver chains, a first test signal at a first angle of arrival at the device;
   means for, whilst the first test signal is being sent, sending at least one additional test signal to the device at at least one additional angle of arrival at the device that has an angular difference to the first angle of arrival;
   means for measuring at least one performance metric of the device whilst the device is receiving the first test signal and the at least one additional test signal; and
   means for comparing the at least one performance metric to at least one corresponding requirement value, the requirement value being dependent on the angular difference between the at least one additional angle of arrival and the first angle of arrival.

FIG. 1

FIG. 2

*FIG. 3*

FIG. 4

FIG. 5

FIG. 6

Fixed probe 1

Fixed delta AoA

Fixed probe 2

Top

Bot

*FIG. 7*

*FIG. 8*

4L MIMO
spherical coverage
requirement 1

Top view

$\theta_1 + x^o$

*900*

*914*

*910*

*912*

*902*

Min $\theta_2 - \theta_1^o$

Reflector #2

$\theta_2$

$\theta_2$

*908*

Shadow zone
no requirements
to 4L MIMO

Reflector #1

4L MIMO
spherical coverage
requirement 2

Min $\theta_1 - \theta_2^o$

*906*

*904*

$\theta_1$

*920*

4L MIMO
spherical coverage
requirement 1

$\theta_1 + y^o$

FIG. 9

EP 4 354 765 A1

*900*

Side view

Reflector #2

Reflector #1

*902*

DUT fixture

Reflector #2

Reflector #1

$\varphi_2$

$\varphi_1$

$\theta_2$

$\theta_1$

$\theta_1$

Arm2

Pedestal

Reflector #2

Reflector #1

*920*

*912*

Arm1

*908*

FIG. 10

FIG. 11

FIG. 12

FIG. 13

```
┌──────────────────────────┐
│  Sending, to a device     │  ~S1401
│  with multi-receiver      │
│  chains, a first test     │
│  signal at a first angle  │
│  of arrival at the device │
└──────────────────────────┘
             │
             ▼
┌──────────────────────────┐
│  Whilst the first test    │  ~S1402
│  signal is being sent,    │
│  sending at least one     │
│  additional test signal   │
│  to the device at least   │
│  one additional angle of  │
│  arrival at the device    │
│  that has an angular      │
│  difference to the first  │
│  angle of arrival         │
└──────────────────────────┘
             │
             ▼
┌──────────────────────────┐
│  Measuring at least one   │  ~S1403
│  performance metric of    │
│  the device whilst the    │
│  device is receiving the  │
│  first test signal and    │
│  the at least one         │
│  additional test signal   │
└──────────────────────────┘
             │
             ▼
┌──────────────────────────┐
│  Comparing the at least   │  ~S1404
│  one performance metric   │
│  to at least one          │
│  corresponding            │
│  requirement value, the   │
│  requirement value being  │
│  dependent on the angular │
│  difference between the   │
│  at least one additional  │
│  angle of arrival and the │
│  first angle of arrival   │
└──────────────────────────┘
```

## FIG. 14

FIG. 15

**EP 4 354 765 A1**

Europäisches Patentamt
European Patent Office
Office européen des brevets

# EUROPEAN SEARCH REPORT

Application Number

EP 22 20 1193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/164046 A1 (QUALCOMM INC [US]; HAN BIN [CN] ET AL.) 20 August 2020 (2020-08-20) * abstract * * paragraphs [0010], [0059], [0110], [0125], [0133], [0150] – [0152], [0181] – [0182] * * figures 2-4,7 * | 1-14 | INV. H04B17/00 H04B17/29 G01S7/40 |
| A | MODERATOR (NTT DOCOMO ET AL: "Moderator's summary for discussion [RAN95e-RAN4-R18Prep-02] FR2 RF Enhancements", 3GPP DRAFT; RP-220020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Electronic Meeting; 20220317 – 20220323 14 February 2022 (2022-02-14), XP052109051, Retrieved from the Internet: URL:https://ftp.3gpp.org/tsg_ran/TSG_RAN/TSGR_95e/Inbox/RP-220020.zip RP-220020_RAN95e-RAN4-R18Prep-02__FR2_RF_Enhancements-v0.0.4.pdf [retrieved on 2022-02-14] * abstract * * pages 30-40 * | 1-14 | |

| TECHNICAL FIELDS SEARCHED (IPC) |
|---|
| H04B G01S |

The present search report has been drawn up for all claims

| Place of search | Date of completion of the search | Examiner |
|---|---|---|
| The Hague | 21 March 2023 | Yang, Betty |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27

**ANNEX TO THE EUROPEAN SEARCH REPORT
ON EUROPEAN PATENT APPLICATION NO.**

EP 22 20 1193

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2023

| Patent document cited in search report | | Publication date | Patent family member(s) | | Publication date |
|---|---|---|---|---|---|
| WO 2020164046 | A1 | 20-08-2020 | WO | 2020164046 A1 | 20-08-2020 |
| | | | WO | 2020164563 A1 | 20-08-2020 |

EPO FORM P0459

For more details about this annex : see Official Journal of the European Patent Office, No. 12/82